# EUROPEAN PATENT APPLICATION

(11) **EP 3 229 118 A1**
(43) Date of publication of application: **11.10.2017**
(21) Application number: 14907196.1
(22) Date of filing: 02.12.2014
(51) Int. Cl.: G06F 3/048, G05B 19/418, G06F 12/00, G06Q 50/04

(54) **SCREEN GENERATION SYSTEM, SCREEN GENERATION METHOD, AND SCREEN GENERATION PROGRAM**

(71) Applicant: Mitsubishi Electric Corporation, Chiyoda-ku Tokyo 100-8310 (JP)
(72) Inventor: KYOYA, Takanori, Tokyo 100-8310 (JP)
(74) Representative: Pfenning, Meinig & Partner mbB
(86) International application number: PCT/JP2014/081871
(87) International publication number: WO 2016/088201

(57) **Abstract**

In a screen generation system (100), an item name management unit (201) stores item name information (211) that defines a correspondence relation between a master item name being a fixed item name and a used item name being a variable item name. A data acquisition unit (420) acquires, from a database (300), an item name set for each item in a table (301) and data stored in each item in the table (301). An item name conversion unit (431) refers to the item name information (211) stored in the item name management unit (201), so as to identify a master item name corresponding to the same used item name as the item name acquired by the data acquisition unit (420), and converts the item name acquired by the data acquisition unit (420) into the identified master item name. A screen generation unit (440) generates a screen (441) to display the item name after being converted by the item name conversion unit (431) and the data acquired by the data acquisition unit (420).

## Description

### Technical Field

The present invention relates to a screen generation system, a screen generation method, and a screen generation program.

### Background Art

Conventionally, there is a system that performs production management across a plurality of factories (for example, see Patent Literature 1). In this system, each factory is connected with a production management side via a network. Data of production results of each factory is assembled in the production management side using item names and formats which are unified. The item names are, specifically, item names in a table of a database. The formats are, specifically, formats of data stored in the table of the database.

### Citation List

### Patent Literature

Patent Literature 1: JP 2006-221305 A

### Summary of Invention

### Technical Problem

In the conventional system, it is premised that the item names and formats in the database to store the data of the production results of each factory are fixed. By unifying the item names and formats in the databases of all the factories, production states of all the factories can be managed in the production management side. If the item names and formats in the databases vary among the factories, differences in the item names and formats among the factories are absorbed by converting the item names and formats. However, only predetermined item names and formats can be converted, so that each factory cannot change an item name and a format without permission from the production management side.

In an actual manufacturing site such as a factory, improvement activities are performed daily and the improvement activities are never ending. If the item names and formats in the database are fixed, the flexibility of data management required in the site is restricted.

It is an object of the present invention to flexibly deal with a change in an item name when a screen to display data stored in each item in a table of a database is generated.

### Solution to Problem

A screen generation system according to one aspect of the present invention includes:
an item name management unit to store item name information that defines a correspondence relation between a master item name being a fixed item name and a used item name being a variable item name;
a database having a table consisting of items for each of which an item name is set, the database storing data in each item in the table;
a data acquisition unit to acquire, from the database, the item name set for each item in the table and the data stored in each item in the table;
an item name conversion unit to refer to the item name information stored in the item name management unit, so as to identify a master item name corresponding to a same used item name as the item name acquired by the data acquisition unit, and convert the item name acquired by the data acquisition unit into the identified master item name; and
a screen generation unit to generate a screen to display the item name after being converted by the item name conversion unit and the data acquired by the data acquisition unit.

### Advantageous Effects of Invention

In the present invention, a correspondence relation between a master item name being a fixed item name and a used item name being a variable item name is defined. When data stored in each item in a table of a database is displayed, a master item name corresponding to the same used item name as the item name set for each item is displayed together with the data. Therefore, according to the present invention, it is possible to flexibly deal with a change in an item name when a screen to display the data stored in each item in the table of the database is generated.

### Brief Description of Drawings

Fig. 1 is a block diagram illustrating a configuration of a screen generation system according to a first embodiment;
Fig. 2 is a block diagram illustrating a configuration of a factory management apparatus of the screen generation system according to the first embodiment;
Fig. 3 is a block diagram illustrating a configuration of an integrated management apparatus of the screen generation system according to the first embodiment;
Fig. 4 is a flowchart illustrating operation of the screen generation system according to the first embodiment;
Fig. 5 is a flowchart illustrating operation of the screen generation system according to the first embodiment;
Fig. 6 is a diagram illustrating an example of item name information before being updated and item name information after being updated according to the first embodiment;
Fig. 7 is a diagram illustrating an example of a change history of item names according to the first embodiment;
Fig. 8 is a diagram illustrating an example of format information before being updated and format information after being updated according to the first embodiment;
Fig. 9 is a diagram illustrating an example of a change history of formats according to the first embodiment;
Fig. 10 is a diagram illustrating an example in which a production management screen is generated from report tables of a plurality of factories by the screen generation system according to the first embodiment;
Fig. 11 is a diagram illustrating an example of a selection screen according to the first embodiment;
Fig. 12 is a diagram illustrating an example of the item name information before being updated and the item name information after being updated according to the first embodiment;
Fig. 13 is a diagram illustrating an example of the change history of the item names according to the first embodiment;
Fig. 14 is a diagram illustrating an example of the item name information before being updated and the item name information after being updated according to the first embodiment;
Fig. 15 is a diagram illustrating an example of the change history of the item names according to the first embodiment;
Fig. 16 is a block diagram illustrating a configuration of a screen generation system according to a second embodiment;
Fig. 17 is a block diagram illustrating a configuration of a screen generation system according to a third embodiment;
Fig. 18 is a block diagram illustrating a configuration of a factory management apparatus of the screen generation system according to the third embodiment;
Fig. 19 is a block diagram illustrating a configuration of a screen generation system according to a fourth embodiment; and
Fig. 20 is a diagram illustrating an example of a hardware configuration of the factory management apparatus and the integrated management apparatus of each of the screen generation systems according to the embodiments of the present invention.

### Description of Embodiments

Embodiments of the present invention will be described hereinafter with reference to the drawings. Note that like reference numerals denote like or corresponding parts throughout the drawings. In the description of the embodiments, descriptions of like or corresponding parts may be omitted or simplified as appropriate.

### First Embodiment

A configuration of a system according to this embodiment, operation of the system according to this embodiment, and effects of this embodiment will be sequentially described hereinafter.

### *** Description of Configuration ***

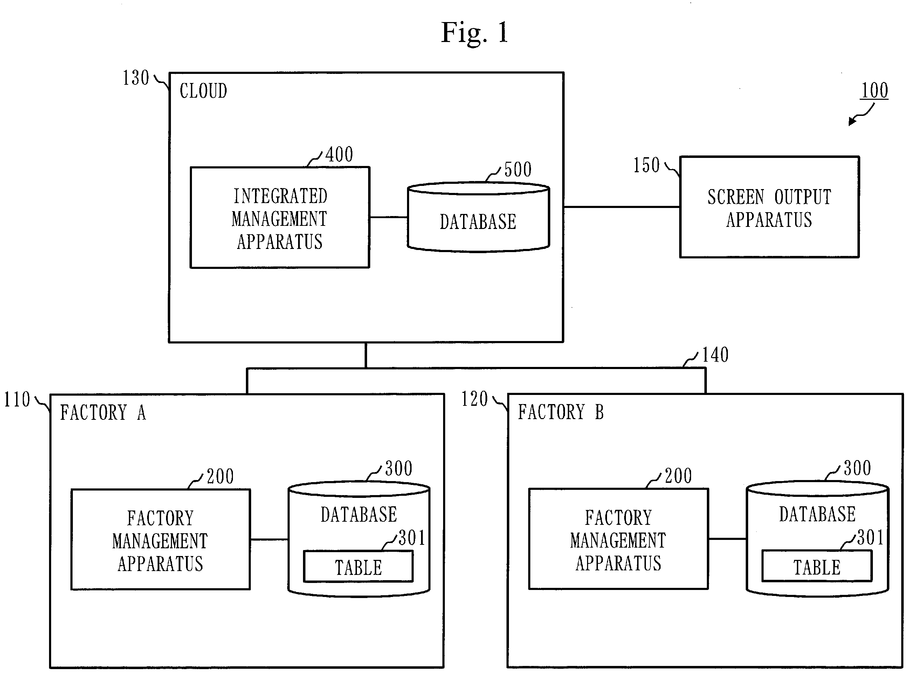

With reference to Fig. 1, a configuration of a screen generation system 100 being the system according to this embodiment will be described.

The screen generation system 100 is a system that optimizes the production management of a factory A 110 and a factory B 120 as a plurality of factories by utilizing a cloud 130. The cloud 130 is a cloud computing system. The cloud 130 is used by an administrator who performs the production management across the plurality of factories. The cloud 130 is connected, via a network 140, with the factory A 110 and the factory B 120 as the factories to be managed. Note that the number of factories is not limited to two, and may be one, or may be three or more.

The screen generation system 100 has a factory management apparatus 200 and a database 300 in each of the factory A 110 and the factory B 120. The factory management apparatus 200 manages item names and formats in the database 300 of each factory. The database 300 stores data of production results. The factory management apparatus 200 and the database 300 are connected with each other in each factory. When a change occurs in an item name or a format in the database 300 of each factory, the factory management apparatus 200 manages the change.

The screen generation system 100 has an integrated management apparatus 400 and a database 500 in the cloud 130. The integrated management apparatus 400 cooperates with each of the factory management apparatuses 200 of all the factories, namely, the factory A 110 and the factory B 120 in this embodiment. The database 500 stores data of the database 300 transmitted from each of the factory A 110 and the factory B 120. The integrated management apparatus 400 and the database 500 are connected with each other in the cloud 130.

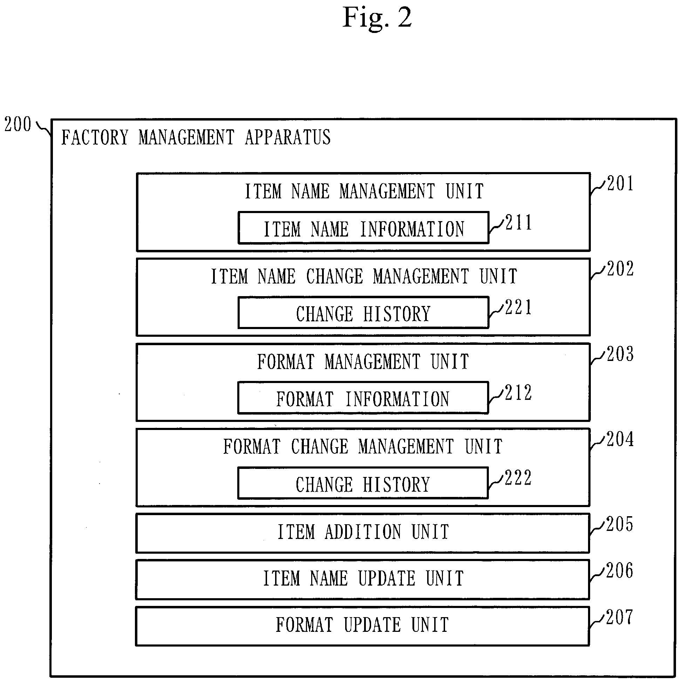

With reference to Fig. 2, a configuration of the factory management apparatus 200 will be described.

The factory management apparatus 200 has an item name management unit 201 to manage item names, an item name change management unit 202 to manage a change history 221 of the item names, a format management unit 203 to manage formats, a format change management unit 204 to manage a change history 222 of the formats, an item addition unit 205 to cause addition of a new item to be reflected in the item name management unit 201, an item name update unit 206 to cause a change in an item name to be reflected in the item name management unit 201, and a format update unit 207 to cause a change in a format to be reflected in the format management unit 203.

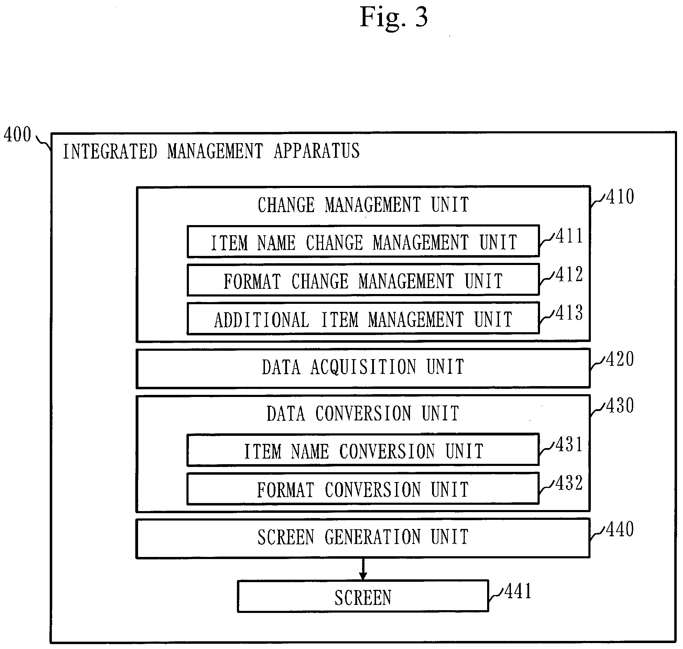

With reference to Fig. 3, a configuration of the integrated management apparatus 400 will be described.

The integrated management apparatus 400 has a change management unit 410 to manage a change in the database 300 of each factory, a data acquisition unit 420 to acquire data from the database 300 of each factory, a data conversion unit 430 to convert an item name and a format, and a screen generation unit 440 to automatically generate a production management screen for the administrator to compare production states. The change management unit 410 has an item name change management unit 411 to manage a change in an item name, a format change management unit 412 to manage a change in a format, and an additional item management unit 413 to manage an additional item. The data conversion unit 430 has an item name conversion unit 431 to convert an item name and a format conversion unit 432 to convert a format.

As illustrated in Fig. 1, the cloud 130 is connected with a screen output apparatus 150. The screen output apparatus 150 outputs the production management screen generated by the screen generation unit 440.

As described above, the screen generation system 100 has the item name management unit 201, the database 300, the data acquisition unit 420, the item name conversion unit 431, and the screen generation unit 440.

The item name management unit 201 stores item name information 211 that defines a correspondence relation between a master item name being a fixed item name and a used item name being a variable item name. The database 300 has a table 301 consisting of items for each of which an item name is set. Data is stored in each item in the table 301. In this embodiment, the data is data of the production results of each factory. The data acquisition unit 420 acquires, from the database 300, the item name set for each item in the table 301 and the data stored in each item in the table 301. The item name conversion unit 431 refers to the item name information 211 stored in the item name management unit 201, so as to identify a master item name corresponding to the same used item name as the item name acquired by the data acquisition unit 420. The item name conversion unit 431 converts the item name acquired by the data acquisition unit 420 into the identified master item name. The screen generation unit 440 generates a screen 441 to display the item name after being converted by the item name conversion unit 431 and the data acquired by the data acquisition unit 420. In this embodiment, the screen 441 is the production management screen described above.

The screen generation system 100 further has the item name update unit 206.

When the item name set for one of the items in the table 301 is changed, the item name update unit 206 updates, in the item name information 211 stored in the item name management unit 201, the same used item name as the item name before being changed to an item name after being changed.

The screen generation system 100 further has the format management unit 203 and the format conversion unit 432.

The format management unit 203 stores format information 212 that defines a correspondence relation between a master format being a fixed format and a used format being a variable format. The format conversion unit 432 refers to the format information 212 stored in the format management unit 203, so as to identify a master format corresponding to the same used format as the format used in the data acquired by the data acquisition unit 420. The format conversion unit 432 converts the data acquired by the data acquisition unit 420 into data in the identified master format. The screen 441 generated by the screen generation unit 440 is a screen to display the item name after being converted by the item name conversion unit 431 and the data after being converted by the format conversion unit 432.

The screen generation system 100 further has the format update unit 207.

When the format used in the data stored in one of the items in the table 301 is changed, the format update unit 207 updates, in the format information 212 stored in the format management unit 203, the same used format as the format before being changed to a format after being changed.

Note that if the data in the database 300 of each factory is duplicated in the database 500 in the cloud 130, the same table 301 as that in the database 300 also exists in the database 500. In this case, the database 500 in the cloud 130 can substitute for the database 300 of each factory.

If the database 500 in the cloud 130 substitutes for the database 300 of each factory, the item name management unit 201 and the item name update unit 206, which are included in the factory management apparatus 200 of each factory in this embodiment, may be included in the integrated management apparatus 400 in the cloud 130. That is, the item name management unit 201 and the item name update unit 206 may be implemented in the cloud 130.

Similarly, if the database 500 in the cloud 130 substitutes for the database 300 of each factory, the format management unit 203 and the format update unit 207, which are included in the factory management apparatus 200 of each factory in this embodiment, may be included in the integrated management apparatus 400 in the cloud 130. That is, the format management unit 203 and the format update unit 207 may be implemented in the cloud 130.

If the database 500 in the cloud 130 substitutes for the database 300 of each factory, the data acquisition unit 420 may acquire the item name set for each item in the table 301 and the data stored in each item in the table 301 from the database 500 in the cloud 130.

The data acquisition unit 420, the item name conversion unit 431, the format conversion unit 432, and the screen generation unit 440, which are included in the integrated management apparatus 400 in the cloud 130 in this embodiment, may be included in the factory management apparatus 200 of one of the factories.

The screen generation system 100, which is applied to the production management of factories in this embodiment, may be applied to any type of management other than the production management of factories, such as the operation management of offices and the sales management of shops.

### *** Description of Operation ***

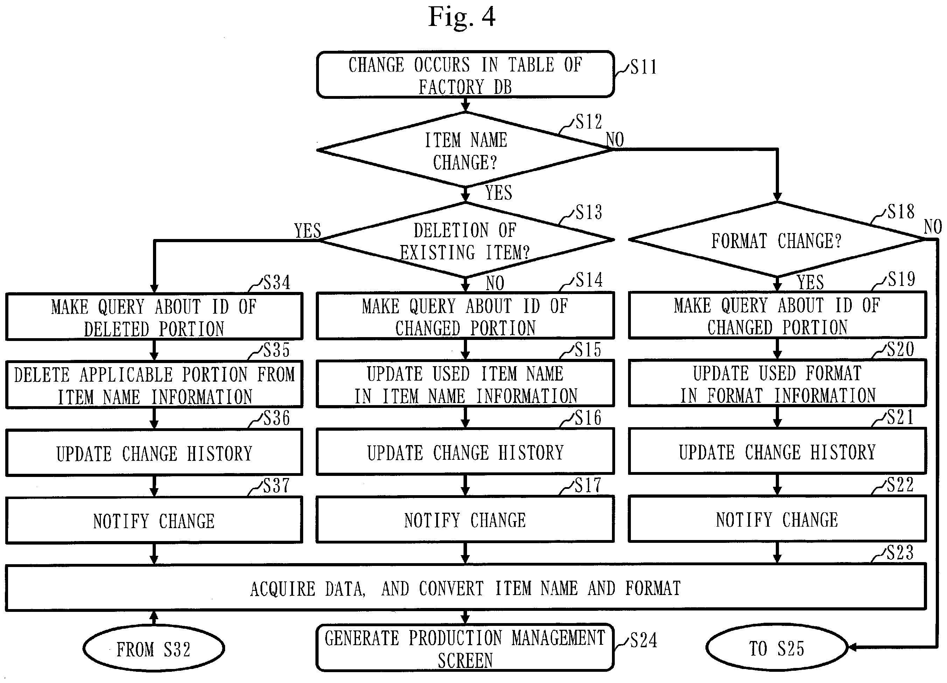

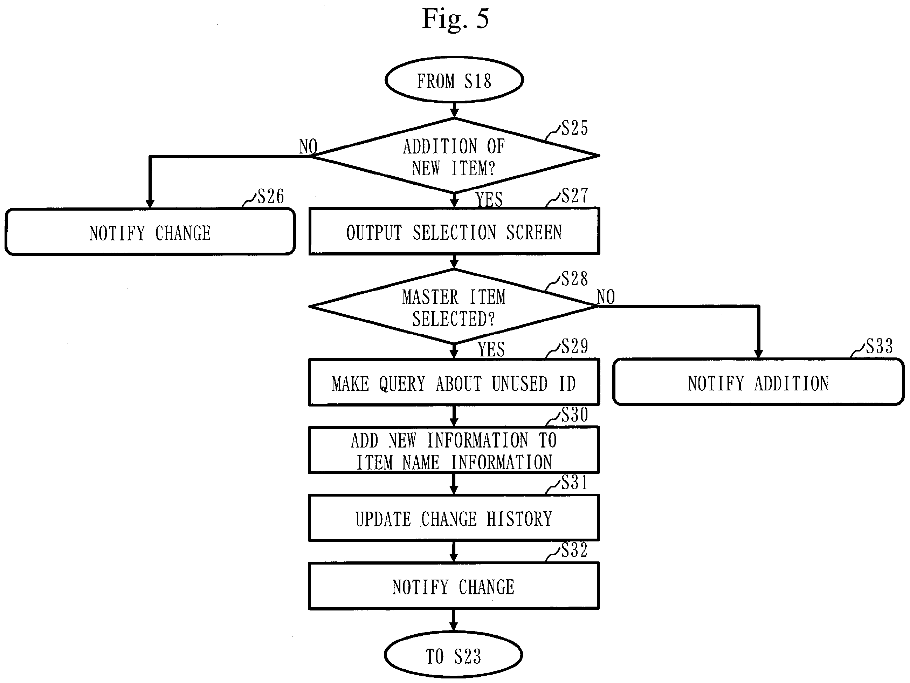

With reference to Fig. 4 and Fig. 5, the operation of the screen generation system 100 will be described. The operation of the screen generation system 100 is equivalent to a screen generation method according to this embodiment. The operation of the screen generation system 100 is equivalent to a processing procedure of a screen generation program according to this embodiment.

In the following description, the database 300 of each factory will be referred to as the "factory DB", and the database 500 in the cloud 130 will be referred to as the "cloud DB".

Although not illustrated, as an initial operation, the screen generation system 100 collects information in the factory DB of each factory into the cloud DB. The screen generation system 100 generates, by schema matching, a comparison screen for performing the production management. In the comparison screen, match confirmation on item names and formats as well as modification thereof as required are performed manually. The "match confirmation" means to check correctness of a correspondence relation between a master item name and a used item name and a correspondence relation between a master format and a used format that are defined by schema matching using an item name and a format used in the table 301 of the factory DB as the used item name and the used format, respectively. Any incorrect correspondence relation is corrected. The definitions of the correspondence relations corrected as appropriate are given to the item name management unit 201 and the format management unit 203 as the item name information 211 and the format information 212, respectively.

In S11, it is assumed that a change has occurred in the table 301 of the factory DB.

In S12, it is determined whether the type of the change in S11 is an item name change. If it is an item name change, the flow proceeds to S 13. If it is not an item name change, the flow proceeds to S18.

In S 13, it is determined whether the type of the change in S11 is deletion of an existing item. If it is deletion of an existing item, the flow proceeds to S34. If it is not deletion of an existing item, the flow proceeds to S 14.

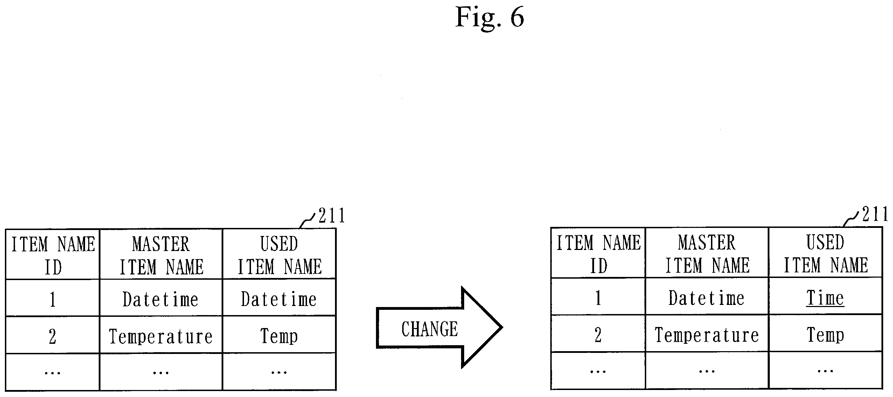

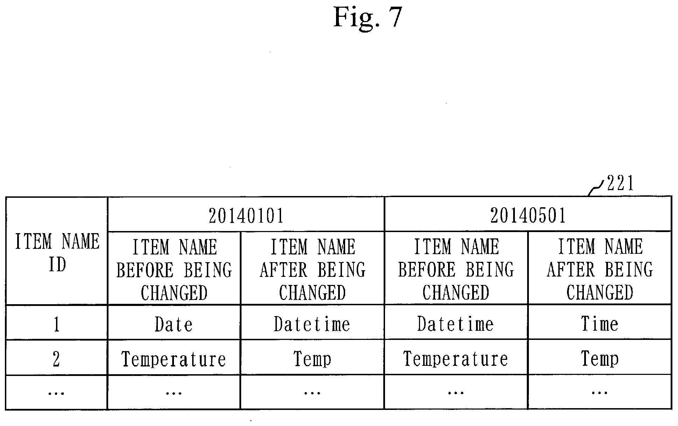

S 14 to S 17 are an item name update process. In the item name update process, the item name information 211 and the change history 221 of the item names are updated. Fig. 6 illustrates an example of the item name information 211 before being updated and the item name information 211 after being updated. Fig. 7 illustrates an example of the change history 221 of the item names.

In S14, the item name update unit 206 queries the item name management unit 201 about the identifier (ID) of the changed portion. That is, the item name update unit 206 acquires the item name ID that identifies the changed item name from the item name information 211 stored in the item name management unit 201. In the item name information 211, item names used in the production management screen are master item names, and item names used in the factory DB are used item names. One master item name corresponds to one used item name with regard to each item name ID. In the example in Fig. 6, before the change in the item name, the item name information 211 indicates that the master item name "Datetime" corresponds to the used item name "Datetime" with regard to the item name ID "1".

In S15, the item name update unit 206 updates, in the item name information 211 stored in the item name management unit 201, the same used item name as the item name before being changed to an item name after being changed. In the example in Fig. 6, the used item name "Datetime" is changed to "Time" and the item name update unit 206 updates, in the item name information 211, the used item name "Datetime" of the item name ID "1" acquired in S 14 to "Time". Therefore, after the change in the item name, the item name information 211 indicates that the master item name "Datetime" corresponds to the used item name "Time" with regard to the item name ID "1".

In S16, the item name update unit 206 adds new information to the change history 221 stored in the item name change management unit 202. In the change history 221, a date together with an item name before being changed and an item name after being changed on the date are recorded with regard to each item name ID. In the example in Fig. 7, changing of the item name "Datetime" to "Time" on the date "20140501" is recorded in the change history 221 with regard to the item name ID "1". The change history 221 is referred to in order to check a correspondence relation between a previous item name and a master item name when the production management screen is generated by using a backup or the like of the table 301 before a change in an item name.

In S17, the item name update unit 206 notifies the integrated management apparatus 400 of the change. After S 17, the flow proceeds to S23.

In S18, it is determined whether the type of the change in S11 is a format change. If it is a format change, the flow proceeds to S19. If it is not a format change, the flow proceeds to S25.

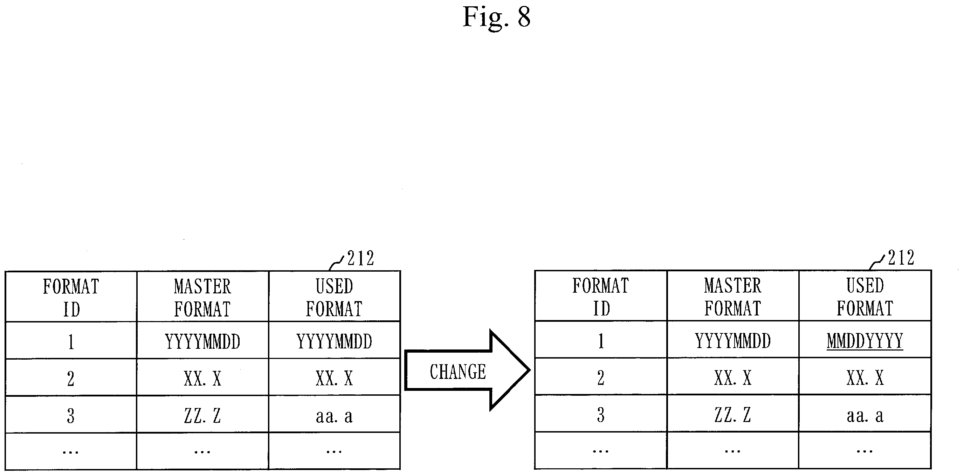

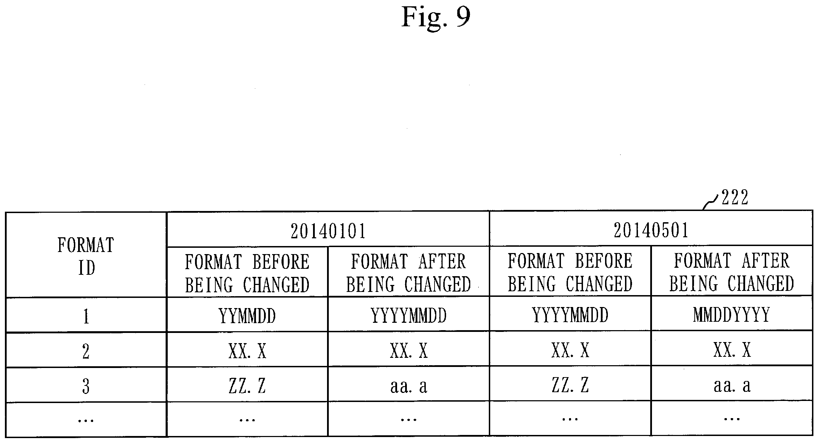

S 19 to S22 are a format update process. In the format update process, the format information 212 and the change history 222 of the formats are updated. Fig. 8 illustrates an example of the format information 212 before being updated and the format information 212 after being updated. Fig. 9 illustrates an example of the change history 222 of the formats.

In S19, the format update unit 207 queries the format management unit 203 about the ID of the changed portion. That is, the format update unit 207 acquires the format ID that identifies the changed format from the format information 212 stored in the format management unit 203. In the format information 212, formats used in the production management screen are master formats, and formats used in the factory DB are used formats. One master format corresponds to one used format with regard to each format ID. In the example in Fig. 8, before the change in the format, the format information 212 indicates that the master format "YYYYMMDD" corresponds to the used format "YYYYMMDD" with regard to the format ID "1".

In S20, the format update unit 207 updates, in the format information 212 stored in the format management unit 203, the same used format as the format before being changed to a format after being changed. In the example in Fig. 8, the used format "YYYYMMDD" is changed to "MMDDYYYY" and the format update unit 207 updates, in the format information 212, the used format "YYYYMMDD" of the format ID "1" acquired in S19 to "MMDDYYYY". Therefore, after the change in the format, the format information 212 indicates that the master format "YYYYMMDD" corresponds to the used format "MMDDYYYY" with regard to the format ID "1".

In S21, the format update unit 207 adds new information to the change history 222 stored in the format change management unit 204. In the change history 222, a date together with a format before being changed and a format after being changed on the date are recorded with regard to each format ID. In the example in Fig. 9, changing of the format "YYYYMMDD" to "MMDDYYYY" on the date "20140501" is recorded in the change history 222 with regard to the format ID "1". The change history 222 is referred to in order to check a correspondence relation between a previous format and a master format when the production management screen is generated using a backup or the like of the table 301 before a change in a format.

In S22, the format update unit 207 notifies the integrated management apparatus 400 of the change.

S23 is a data acquisition process, an item name conversion process, and a format conversion process.

In S24, the data acquisition unit 420 acquires, from the database 300, the item name set for each item in the table 301 and the data stored in each item in the table 301. The item name conversion unit 431 refers to the item name information 211 stored in the item name management unit 201, so as to identify a master item name corresponding to the same used item name as the item name acquired by the data acquisition unit 420. In the example in Fig. 6, when the item name "Time" is acquired from the table 301 by the data acquisition unit 420, the master item name "Datetime" corresponding to the same used item name "Time" as the acquired item name is identified by the item name conversion unit 431. The item name conversion unit 431 converts the item name acquired by the data acquisition unit 420 into the identified master item name. The format conversion unit 432 refers to the format information 212 stored in the format management unit 203, so as to identify a master format corresponding to the same used format as the format used in the data acquired by the data acquisition unit 420. In the example in Fig. 8, when the data in the format "MMDDYYYY" is acquired from the table 301 by the data acquisition unit 420, the master format "YYYYMMDD" corresponding to the same used format "MMDDYYYY" as the format of the acquired data is identified by the format conversion unit 432. Note that the format conversion unit 432 may analyze the data acquired by the data acquisition unit 420 to determine the format used in the data, or may refer to meta-information of the table 301 to determine the format used in the data. The format conversion unit 432 converts the data acquired by the data acquisition unit 420 into data in the identified master format.

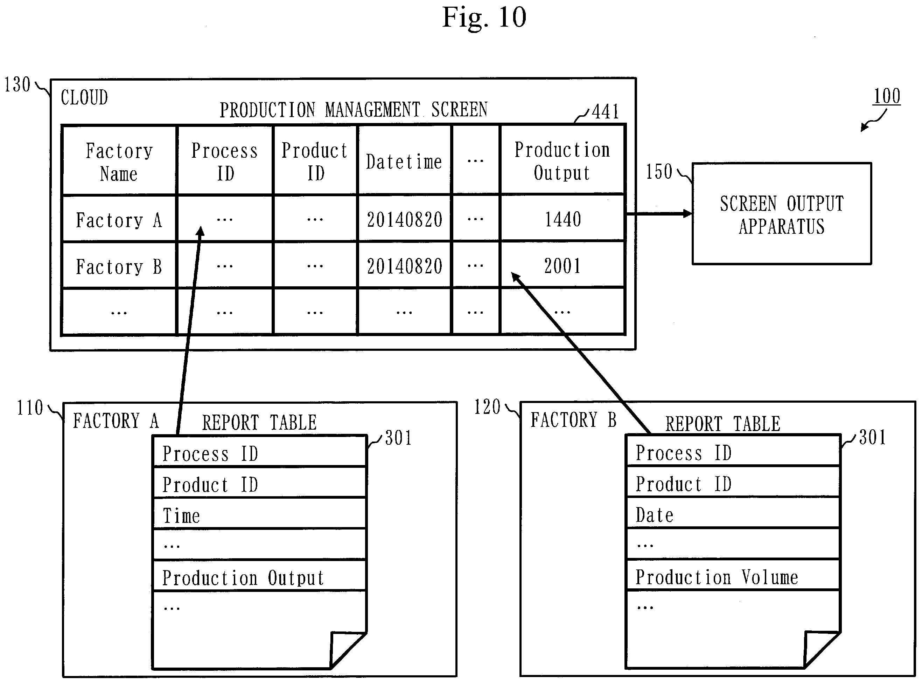

S24 is a screen generation process. In the screen generation process, the production management screen is generated. Fig. 10 illustrates an example in which the production management screen is generated from report tables of the plurality of factories.

In S24, the screen generation unit 440 generates the production management screen being the screen 441 to display the item name after being converted by the item name conversion unit 431 and the data acquired by the data acquisition unit 420. In the example in Fig. 10, the production management screen displays the data "20140820" of the factory A 110 whose format has been converted from "MMDDYYYY" to the master format "YYYYMMDD", as the data of the item under the master item name "Datetime" which corresponds to the item name "Time" in the report table of the factory A110 being the table 301. After S24, the flow ends.

In S25, it is determined whether the type of the change in S11 is addition of a new item. If it is addition of a new item, the flow proceeds to S27. If it is not addition of a new item, the flow proceeds to S26.

In S26, the administrator of the integrated management apparatus 400 is notified that a change other than a change in an item name or a format has occurred in the table 301 of the factory DB. Therefore, the administrator can deal with a case where an unexpected change or the like has occurred.

S27 to S32 are an item addition process.

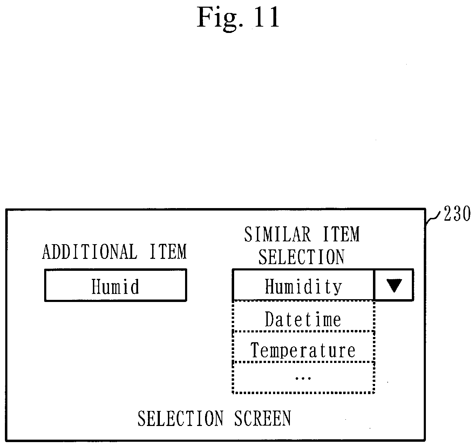

In S27, the item addition unit 205 outputs a selection screen 230 for selecting a master item corresponding to the additional item to a user who performs data management at the factory. Fig. 11 illustrates an example of the selection screen 230.

In S28, it is determined whether the master item corresponding to the additional item has been selected by the user. If the master item has been selected, the flow proceeds to S29. If there is no corresponding master item and "None" has been selected, the flow proceeds to S33.

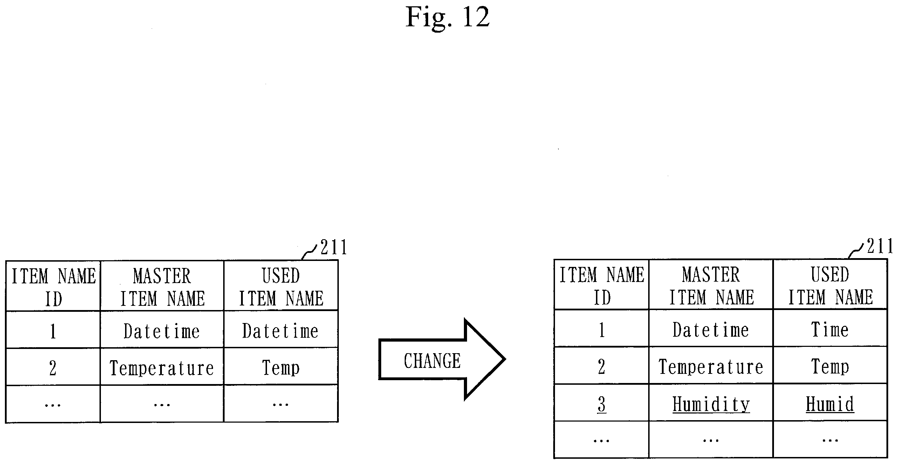

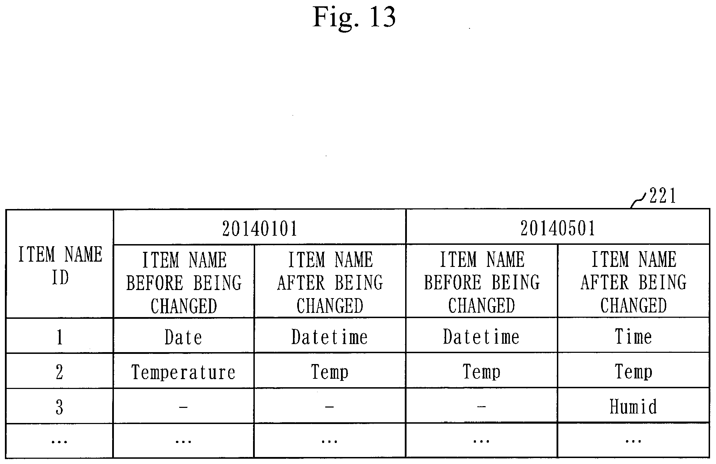

In the item addition process, if the master item corresponding to the additional item is selected, the item name information 211 and the change history 221 of the item names are updated. Fig. 12 illustrates an example of the item name information 211 before being updated and the item name information 211 after being updated. Fig. 13 illustrates an example of the change history 221 of the item names.

In S29, the item addition unit 205 queries the item name management unit 201 about an unused ID. That is, the item addition unit 205 identifies an unused item name ID in the item name information 211 stored in the item name management unit 201. In the example in Fig. 12, before the change in the item name, the item name ID "3" is not used.

In S30, the item addition unit 205 adds, as the used item name, the item name of the additional item and adds, as the master item name, the item name of the master item selected in the selection screen 230 to the item name information 211 stored in the item name management unit 201. In the example in Fig. 12, it is added to the item name information 211 that the master item name "Humidity" corresponds to the used item name "Humid" with regard to the item name ID "3".

In S31, the item addition unit 205 adds new information to the change history 221 stored in the item name change management unit 202. In the example in Fig. 13, addition of the item having the item name "Humid" on the date "20140501" is recorded in the change history 221 with regard to the item name-ID "3".

In S32, the item addition unit 205 notifies the integrated management apparatus 400 of the change. After S32, the flow proceeds to S23.

In S33, the administrator of the integrated management apparatus 400 is notified that the new item having no corresponding master item has been added to the table 301 of the factory DB. Therefore, the administrator can manually deal with the addition of the item.

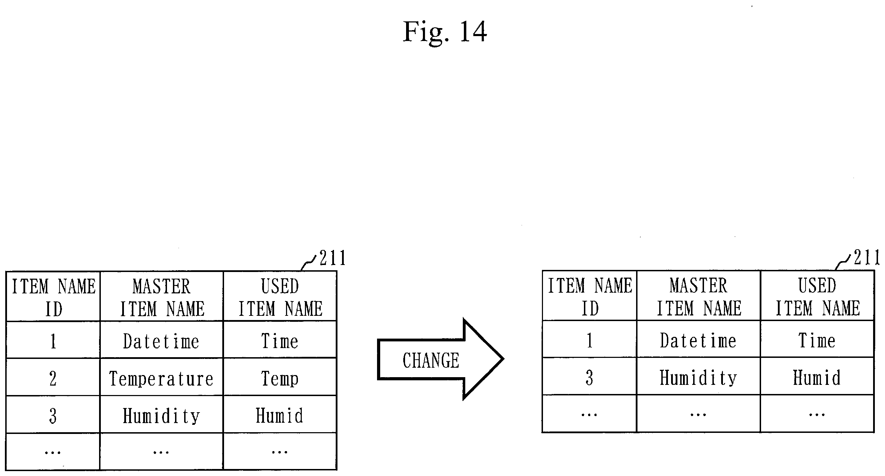

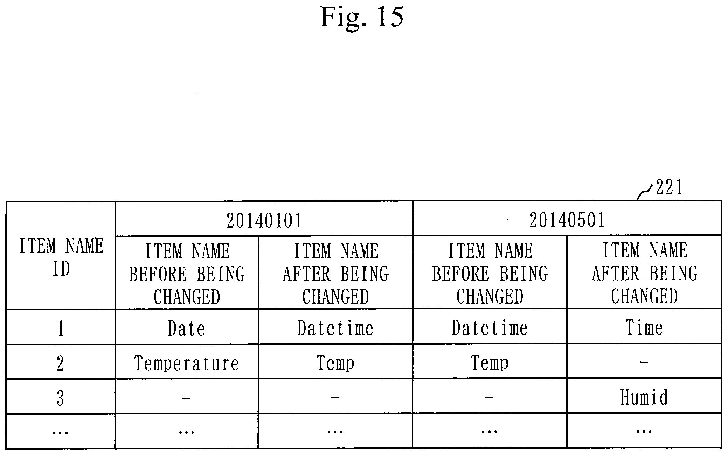

S34 to S37 are an item deletion process. In the item deletion process, the item name information 211 and the change history 221 of the item names are updated. Fig. 14 illustrates an example of the item name information 211 before being updated and the item name information 211 after being updated. Fig. 15 illustrates an example of the change history 221 of the item names.

In S34, the item name update unit 206 queries the item name management unit 201 about the ID of the deleted portion. That is, the item name update unit 206 acquires the item name ID of the deleted item from the item name information 211 stored in the item name management unit 201.

In S35, the item name update unit 206 deletes the portion related to the same used item name as the item name of the deleted item from the item name information 211 stored in the item name management unit 201. In the example in Fig. 14, the portion indicating that the master item name "Temperature" corresponds to the used item name "Temp" is deleted from the item name information 211 with regard to the item name ID "2".

In S36, the item name update unit 206 adds new information to the change history 221 stored in the item name change management unit 202. In the example in Fig. 15, deletion of the item having the item name "Temp" on the date "20140501" is recorded in the change history 221 with regard to the item name ID "2".

In S37, the item name update unit 206 notifies the integrated management apparatus 400 of the change. After S37, the flow proceeds to S25.

### *** Description of Effects ***

In this embodiment, a correspondence relation between a master item name being a fixed item name and a used item name being a variable item name is defined. When the data stored in each item in the table 301 of the database 300 is displayed, the master item name corresponding to the same used item name as the item name set for each item is displayed together with the data. Therefore, according to this embodiment, when the screen 441 to display the data stored in each item in the table 301 of the database 300 is generated, it is possible to flexibly deal with a change in an item name.

In this embodiment, a change in an item name and a change in a format in the table 301 are managed as needed, so as to make item names and formats in each factory variable. Therefore, the production management screen reflecting the changes can be automatically generated.

According to this embodiment, even if a change in a format for recording dates and times or production volumes occurs in a certain factory, for example, the same production management screen as that before the change can be automatically generated. Therefore, the administrator can easily perform the production management of the plurality of factories.

### Second Embodiment

With regard to this embodiment, differences from the first embodiment will be mainly described.

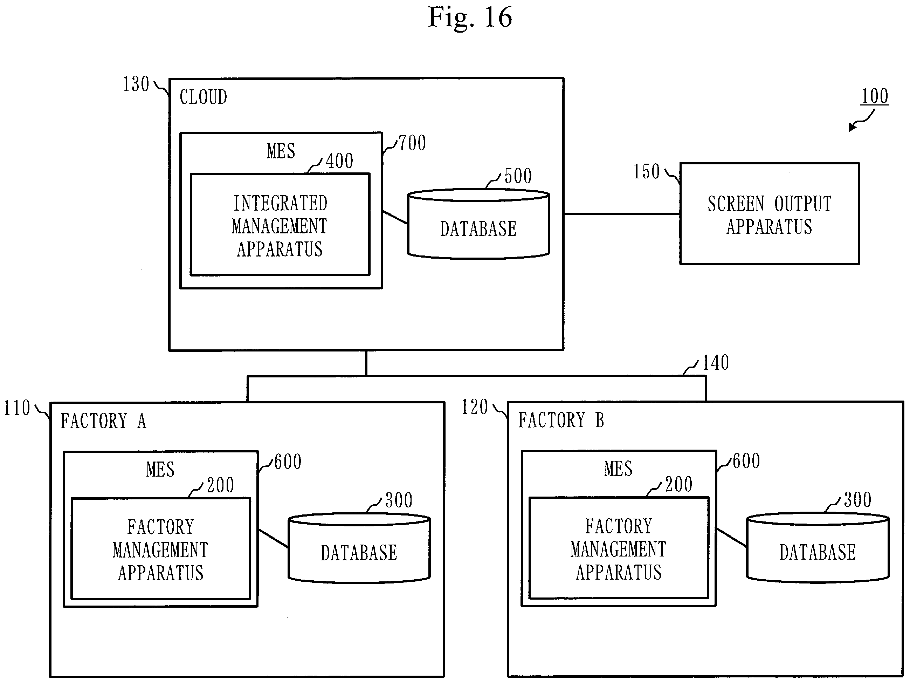

With reference to Fig. 16, a configuration of a screen generation system 100 according to this embodiment will be described hereinafter.

Production results of a factory A 110 and production results of a factory B 120 are managed in a Manufacturing Execution System 600 (MES) of the factory A 110 and an MES 600 of the factory B 120, respectively. A factory management apparatus 200 of the factory A 110 is included in the MES 600 of the factory A 110. A factory management apparatus 200 of the factory B 120 is included in the MES 600 of the factory B 120.

As in the first embodiment, a database 300 is installed in each of the factory A 110 and the factory B 120 as a plurality of factories. Data stored in each item in a table 301 of the database 300 is data indicating the production results of the factory in which the database 300 is installed among the plurality of factories. That is, the data in the database 300 of the factory A 110 is data indicating the production results of the factory A 110, and the data in the database 300 of the factory B 120 is data indicating the production results of the factory B 120.

A database 500 in a cloud 130 assembles the data in the database 300 of the factory A 110 and the data in the database 300 of the factory B 120. An MES 700 in the cloud 130 manages production execution of all the factories using the database 500. An integrated management apparatus 400 is included in the MES 700. That is, a screen generation unit 440 and so on illustrated in Fig. 3 are implemented in the cloud 130.

A screen 441 generated by the screen generation unit 440 is a screen to display an item name after being converted by an item name conversion unit 431 and data which is acquired by a data acquisition unit 420 and indicates the production results of the factory A 110 and the production results of the factory B 120.

According to this embodiment, the MES 600 and the MES 700 can be operated with the flexibility of data management in each factory being maintained.

### Third Embodiment

With regard to this embodiment, differences from the second embodiment will be mainly described.

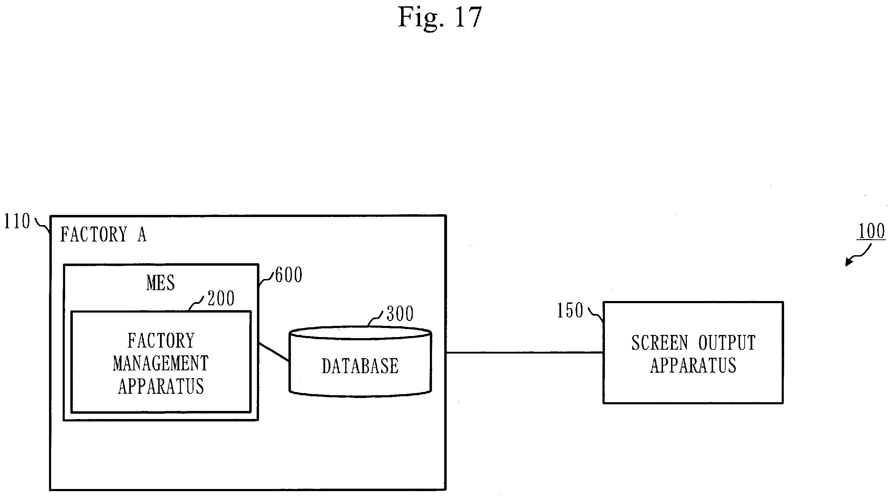

With reference to Fig. 17, a configuration of a screen generation system 100 according to this embodiment will be described hereinafter.

In the second embodiment, the production management across the plurality of factories is performed by cooperation of the MES 600 including the factory management apparatus 200 in each factory and the MES 700 including the integrated management apparatus 400 in the cloud 130, whereas in this embodiment the production management of a factory A 110 alone is performed by an MES 600 of the factory A 110.

Production results of the factory A 110 are managed by the MES 600 of the factory A 110. A factory management apparatus 200 of the factory A 110 is included in the MES 600 of the factory A 110.

A database 300 is installed in the factory A 110. Data stored in each item in a table 301 of the database 300 is data indicating the production results of the factory A 110.

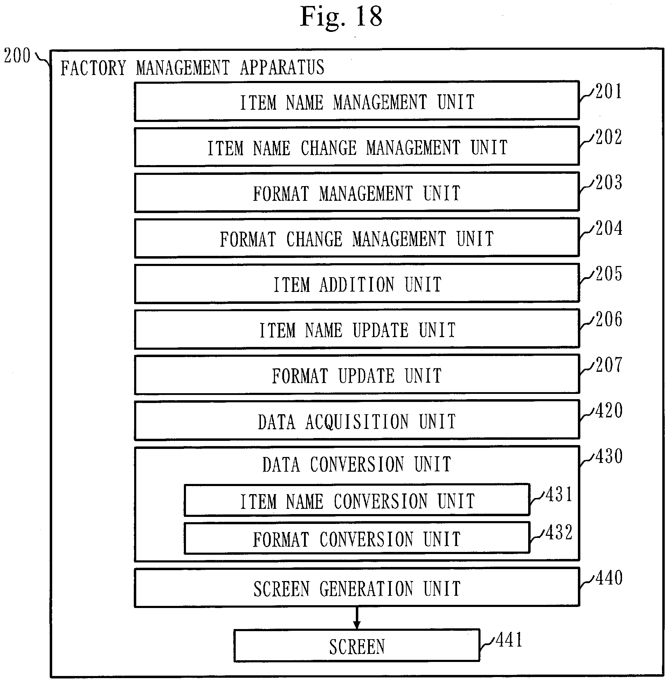

With reference to Fig. 18, a configuration of the factory management apparatus 200 will be described.

A data acquisition unit 420, a data conversion unit 430, and a screen generation unit 440, which are included in the integrated management apparatus 400 in the cloud 130 in the second embodiment, are included in the factory management apparatus 200 of the factory A 110. That is, the data acquisition unit 420, an item name conversion unit 431, a format conversion unit 432, and the screen generation unit 440 are implemented in the MES 600 of the factory A 110.

A screen 441 generated by the screen generation unit 440 is a screen to display an item name after being converted by the item name conversion unit 431 and data which is acquired by the data acquisition unit 420 and indicates the production results of the factory A 110.

According to this embodiment, the MES 600 can be operated with the flexibility of data management in the factory A 110 being maintained.

### Fourth Embodiment

With regard to this embodiment, differences from the second embodiment will be mainly described.

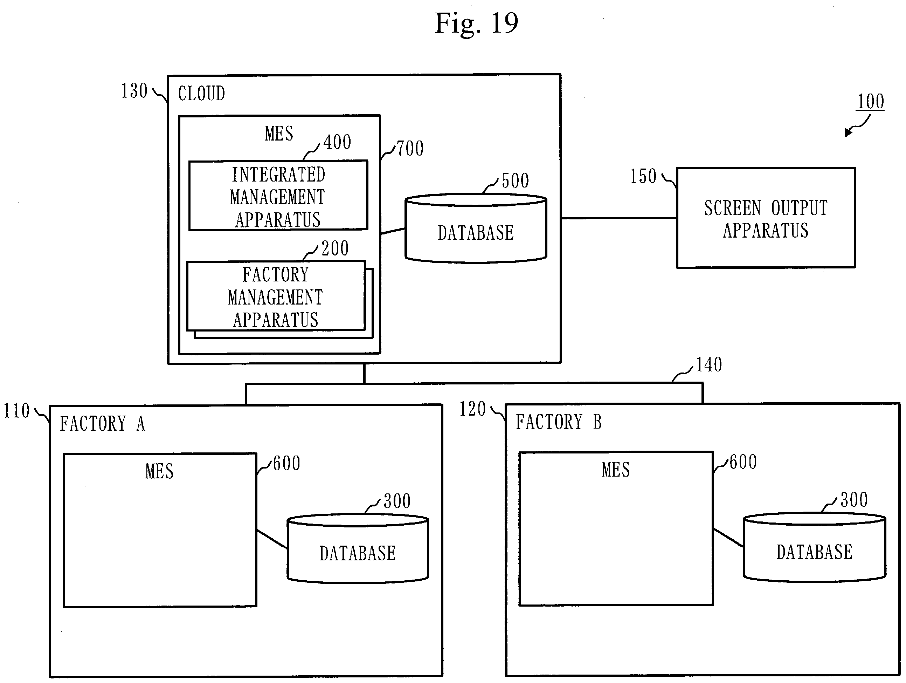

With reference to Fig. 19, a configuration of a screen generation system 100 according to this embodiment will be described hereinafter.

In this embodiment, management of a change in an item name and a change in a format is performed entirely in a cloud 130.

A factory management apparatus 200 of a factory A 110 is included in an MES 700 in the cloud 130, instead of an MES 600 of the factory A 110. A factory management apparatus 200 of a factory B 120 is also included in the MES 700 in the cloud 130, instead of an MES 600 of the factory B 120. That is, an item name management unit 201, a format management unit 203, an item name update unit 206, and a format update unit 207 illustrated in Fig. 2 are implemented in the cloud 130. Note that the factory management apparatus 200 of the factory A 110 and the factory management apparatus 200 of the factory B 120 may be implemented on a single computer, and may be implemented on the same computer as the computer on which an integrated management apparatus 400 is implemented.

According to this embodiment, the MES 600 and the MES 700 can be operated with the flexibility of data management in each factory being maintained. Further, it is no longer necessary to devote resources of the MES 600 of each factory to the management of a change in an item name and a change in a format, and the management of a change in an item name and a change in a format can be performed efficiently by the MES 700 in the cloud 130 in which resources can be enhanced easily.

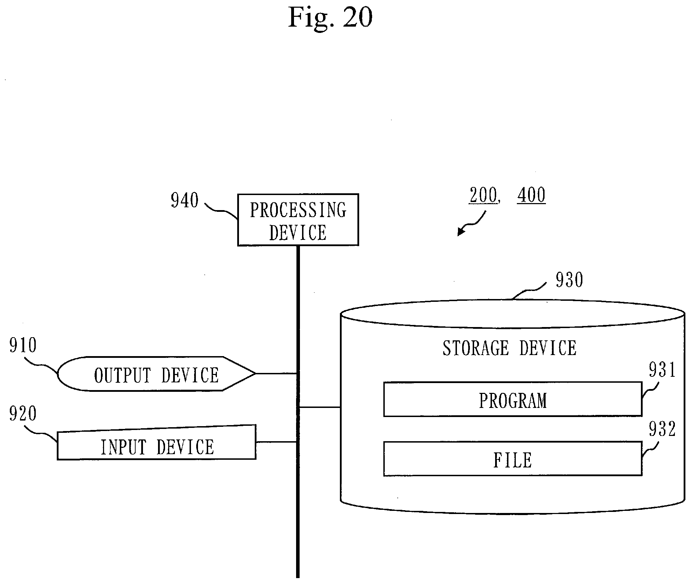

With reference to Fig. 20, an example of a hardware configuration of each of the factory management apparatus 200 and the integrated management apparatus 400 of each of the screen generation systems 100 according to the embodiments of the present invention will be described hereinafter.

In the example in Fig. 20, each of the factory management apparatus 200 and the integrated management apparatus 400 is a computer, and has hardware such as an output device 910, an input device 920, a storage device 930, and a processing device 940. The hardware is used by each one described as a "unit" in the description of the embodiments of the present invention.

The output device 910 is, for example, a display device such as a Liquid Crystal Display (LCD), a printer, or a communication module. The output device 910 is used to output or transmit data, information, and a signal by each one described as a "unit" in the description of the embodiments of the present invention.

The input device 920 is, for example, a keyboard, a mouse, a touch panel, or a communication module. The input device 920 is used to input or receive data, information, and a signal by each one described as a "unit" in the description of the embodiments of the present invention.

The storage device 930 is, for example, a Read Only Memory (ROM), a Random Access Memory (RAM), a Hard Disk Drive (HDD), or a Solid State Drive (SSD). The storage device 930 stores a program 931 and a file 932. The program 931 includes a program for executing a process of each one described as a "unit" in the description of the embodiments of the present invention. The file 932 includes data, information, a signal, and the like for which calculation, processing, reading, writing, use, input, output, and the like are performed by each one described as a "unit" in the description of the embodiments of the present invention.

The processing device 940 is, for example, a Central Processing Unit (CPU). The processing device 940 is connected to other hardware devices via a bus or the like and controls the hardware devices. The processing device 940 reads the program 931 from the storage device 930 and executes the program 931. The processing device 940 is used for calculation, processing, reading, writing, use, input, output, and the like by each one described as a "unit" in the description of the embodiments of the present invention.

Each one described as a "unit" in the description of the embodiments of the present invention may be the one for which the "unit" is replaced by a "circuit", a "device", or an "appliance". Further, each one described as a "unit" in the description of the embodiments of the present invention may be the one for which the "unit" is replaced by a "step", a "procedure", or a "process". That is, each one described as a "unit" in the description of the embodiments of the present invention is realized solely by software, solely by hardware, or by a combination of the software and the hardware. The software is stored in the storage device 930 as the program 931. The program 931 causes the computer to function as each one described as a "unit" in the description of the embodiments of the present invention. Alternatively, the program 931 causes the computer to execute a process of each one described as a "unit" in the description of the embodiments of the present invention.

The embodiments of the present invention have been described above. Some of the embodiments may be implemented in combination. Alternatively, one or some of the embodiments may be implemented partially. For example, only one of the ones each described as a "unit" in the description of the embodiments may be employed, or any arbitrary combination of some of the ones may be employed. Note that the present invention is not limited to the embodiments, and various modifications can be made as necessary.

### Reference Signs List

100: screen generation system, 110: factory A, 120: factory B, 130: cloud, 140: network, 150: screen output apparatus, 200: factory management apparatus, 201: item name management unit, 202: item name change management unit, 203: format management unit, 204: format change management unit, 205: item addition unit, 206: item name update unit, 207: format update unit, 211: item name information, 212: format information, 221: change history, 222: change history, 230: selection screen, 300: database, 301: table, 400: integrated management apparatus, 410: change management unit, 411: item name change management unit, 412: format change management unit, 413: additional item management unit, 420: data acquisition unit, 430: data conversion unit, 431: item name conversion unit, 432: format conversion unit, 440: screen generation unit, 441: screen, 500: database, 600: MES, 700: MES, 910: output device, 920: input device, 930: storage device, 931: program, 932: file, 940: processing device

## Claims

1. A screen generation system comprising:
an item name management unit to store item name information that defines a correspondence relation between a master item name being a fixed item name and a used item name being a variable item name;
a database having a table consisting of items for each of which an item name is set, the database storing data in each item in the table;
a data acquisition unit to acquire, from the database, the item name set for each item in the table and the data stored in each item in the table;
an item name conversion unit to refer to the item name information stored in the item name management unit, so as to identify a master item name corresponding to a same used item name as the item name acquired by the data acquisition unit, and convert the item name acquired by the data acquisition unit into the identified master item name; and
a screen generation unit to generate a screen to display the item name after being converted by the item name conversion unit and the data acquired by the data acquisition unit.

2. The screen generation system according to claim 1, further comprising:
an item name update unit to, when an item name set for one of the items in the table is changed, update a same used item name as the item name before being changed to an item name after being changed, in the item name information stored in the item name management unit.

3. The screen generation system according to claim 1 or 2, further comprising:
a format management unit to store format information that defines a correspondence relation between a master format being a fixed format and a used format being a variable format; and
a format conversion unit to refer to the format information stored in the format management unit, so as to identify a master format corresponding to a same used format as a format used in the data acquired by the data acquisition unit, and convert the data acquired by the data acquisition unit into data in the identified master format,
wherein the screen generated by the screen generation unit is a screen to display the item name after being converted by the item name conversion unit and the data after being converted by the format conversion unit.

4. The screen generation system according to claim 3, further comprising:
a format update unit to, when a format used in data stored in one of the items in the table is changed, update a same used format as the format before being changed to a format after being changed, in the format information stored in the format management unit.

5. The screen generation system according to any one of claims 1 to 4,
wherein the database is installed in a factory,
wherein the data stored in each item in the table is data indicating a production result of the factory, and
wherein the screen generation unit is implemented in a manufacturing execution system of the factory.

6. The screen generation system according to any one of claims 1 to 4,
wherein the database is installed in each of a plurality of factories,
wherein the data stored in each item in the table is data indicating a production result of a factory in which the database is installed among the plurality of factories,
wherein the screen generated by the screen generation unit is a screen to display the item name after being converted by the item name conversion unit and data which is acquired by the data acquisition unit and indicates production results of the plurality of factories, and
wherein the screen generation unit is implemented in a cloud computing system.

7. The screen generation system according to claim 6,
wherein the item name management unit is implemented in the cloud computing system.

8. A screen generation method comprising:
acquiring, from a database, an item name set for each item in a table and data stored in each item in the table, by a computer including an item name management unit to store item name information that defines a correspondence relation between a master item name being a fixed item name and a used item name being a variable item name, the computer including the database having the table consisting of items for each of which the item name is set, the database storing the data in each item in the table;
referring to the item name information stored in the item name management unit, so as to identify a master item name corresponding to a same used item name as the acquired item name, and converting the acquired item name into the identified master item name, by the computer; and
generating a screen to display the item name after being converted and the acquired data, by the computer.

9. A screen generation program for causing a computer to execute, the computer including an item name management unit to store item name information that defines a correspondence relation between a master item name being a fixed item name and a used item name being a variable item name, the computer including a database having a table consisting of items for each of which an item name is set, the database storing data in each item in the table:
a data acquisition process to acquire, from the database, the item name set for each item in the table and the data stored in each item in the table;
an item name conversion process to refer to the item name information stored in the item name management unit, so as to identify a master item name corresponding to a same used item name as the item name acquired by the data acquisition process, and convert the item name acquired by the data acquisition process into the identified master item name; and
a screen generation process to generate a screen to display the item name after being converted by the item name conversion process and the data acquired by the data acquisition process.
